# EUROPÄISCHE PATENTANMELDUNG

(11) **EP 1 315 376 A1**
(43) Veröffentlichungstag der Anmeldung: **28.05.2003**
(21) Anmeldenummer: 01127867.8
(22) Anmeldetag: 22.11.2001
(51) Int. Cl.: H04N 7/173, G06F 17/60

(54) **Verfahren zur Datenübertragung**

(71) Anmelder: Werner, Klaus, 41068 Mönchengladbach (DE); Dorn im Auge GmbH, 40231 Düsseldorf (DE)
(72) Erfinder: Werner, Klaus, 41068 Mönchengladbach (DE)
(74) Vertreter: Grünecker, Kinkeldey, Stockmair & Schwanhäusser Anwaltssozietät

(57) **Zusammenfassung**

Verfahren zur Datenübertragung mittels eines computerimplementierten Datenerzeugers/Datentransmitters das die folgenden Schritte aufweist: Erzeugen und Aussenden einer ersten Signalinformation mit einem invarianten oder variablen Parameter an zumindest einen Empfänger; insbesondere Aussenden weiterer Signalinformationen, die jeweils einen weiteren, insbesondere zeitabhängigen Parameter enthalten können, zumindest bis zum Empfang eines von dem Empfänger oder einem mit diesem verbindbaren Netzteilnehmer stammenden parameterbehafteten Antwortsignales; und Weiterverarbeiten des Antwortsignales in Abhängigkeit von dem mit der ersten Signalinformation ausgesandten oder mit der anschließenden Signalinformation ausgesandten, weiteren Parameter.

## Beschreibung

Die Erfindung betrifft ein Verfahren zur Datenübertragung mittels eines computerimplementierten Datenerzeugers/Datentransmitters.

Bei den meisten herkömmlichen, bisher bekannten Systemen einer (einseitigen) Datenübertragung, wie beispielsweise dem Fernseh- oder Rundfunksignal, hat der Empfänger keinerlei Einflussmöglichkeit auf ein ausgesandtes Signal, das von ihm empfangen wird.

Bei anderen bekannten Arten einer (mehrseitigen) Datenübertragung, kann üblicherweise ein Empfänger mit einem Sender interagieren. Es handelt sich hierbei jedoch im wesentlichen um Individualkommunikation, also um eine Form der Datenübertragung, bei der meistens nur ein Sender direkt mit nur einem Empfänger verbunden ist, wobei jedoch Sender und Empfänger ihre Funktionen austauschen können und dabei beliebig auf die jeweils auszutauschenden Daten Einfluss nehmen können.

Hierbei ergibt sich jedoch das Problem, dass immer nur eine sehr begrenzte Anzahl von Teilnehmern in eine solche Kommunikation eingebunden werden können, so dass keine Breitenwirkung entstehen kann.

Der Erfindung liegt daher die Aufgabe zugrunde, ein Verfahren zur Datenübertragung zu schaffen, das es ermöglicht, eine an eine Vielzahl von Empfängern gerichtete Datenübertragung in Abhängigkeit von der Reaktion einzelner Empfängers individuell zu beeinflussen. Ein solches Verfahren kann z.B. zu sprachcomputergesteuerten Telefon-, Internet- oder Televisionsauktionen verwendet werden.

Diese Aufgabe wird für Verfahren zur Datenübertragung mittels eines computerimplementierten Datenerzeugers/Datentransmitters erfindungsgemäß dadurch gelöst, dass das Verfahren die folgenden Schritte aufweist:
- Erzeugen und Aussenden einer ersten Signalinformation mit einem invarianten oder variablen Parameter an zumindest einen Empfänger;
- insbesondere Aussenden weiterer Signalinformationen, die jeweils einen zeitabhängigen Parameter enthalten können, zumindest bis zum Empfang eines von dem Empfänger oder einem mit diesem verbindbaren Netzteilnehmers stammenden parameterbehafteten Antwortsignales; und
- Weiterverarbeiten des Antwortsignales in Abhängigkeit von dem mit der ersten Signalinformation oder anschließend ausgesandten Parameter.
Aufgrund dieser Verfahrensschritte ist es insbesondere möglich, einer Vielzahl von Empfängern sich ständig verändernde Informationen zu übertragen, wobei es für einzelne dieser Empfänger möglich ist, auf die ihnen übertragenen Informationen reagieren können. Aufgrund ihrer Reaktionen (und/oder des zeitabhängigen Parameters) ist es wiederum möglich, die Aussendung der Signalinformationen zu verändern oder anzupassen.

Indem das Verfahren zur Datenübertragung vollständig computerimplementiert und -gesteuert abläuft, können personalbedingte Ungenauigkeiten bei der Informationsübertragung, dem -empfang und der-verarbeitung größtenteils vermieden werden.

Auch können die Übertragungskosten erheblich reduziert werden, da insbesondere zum Empfang der Antwortsignale und zu deren Auswertung Personalkosten vermieden oder reduziert werden können. Dadurch eignet sich das erfindungsgemäße Verfahren insbesondere auch für auktionsartige Verkäufe und Dauerwerbesendungen, die im Fernsehen, per Telefon, via Mobiltelefone oder über das Internet abgewickelt werden.

Die vorgenannte Aufgabe wird ferner durch die Merkmale des Anspruches 1 gelöst.

Weitere bevorzugte Ausführungsformen sind Gegenstand der Unteransprüche.

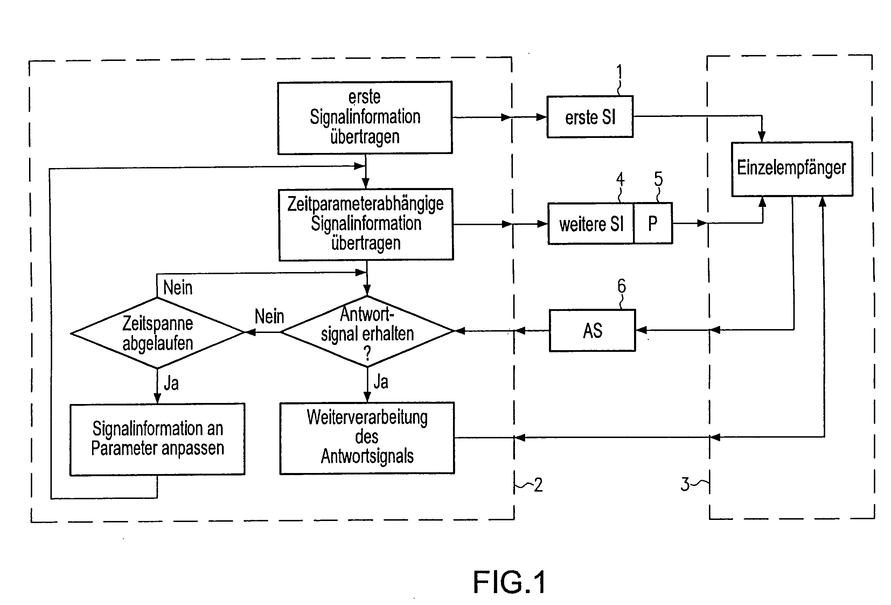

Die Erfindung wird im folgenden anhand einer schematischen Zeichnung beispielsweise und mit weiteren Einzelheiten erläutert. Dabei zeigt die Figur 1 ein schematisiertes Ablaufdiagramm des erfindungsgemäßen Verfahrens zur Datenübertragung.

Wie in der Figur 1 dargestellt, beginnt das Verfahren damit, dass erste Signalinformationen 1 mittels eines computerimplementierten Datenerzeugers/Datentransmitters 2 generiert werden, wobei auch ein Zugriff auf zuvor gespeicherte Daten und Programme in herkömmlicher Weise erfolgen kann, und dann diese ersten Signalinformationen an einen oder mehrere Empfänger 3 übertragen werden.

Zur Verdeutlichung des weiteren Verfahrensablaufes soll zunächst ein Einsatz- bzw. Verwendungsbeispiel des erfindungsgemäßen Verfahrens im Bereich der Produktvermarktung dargestellt werden. Insbesondere wird hierbei auf den Einsatz des Verfahrens im Rahmen einer sogenannten "Fernauktion" eingegangen. Hierbei soll ein möglicher Ablauf konkret vorab erläutert werden, um darauffolgend den Einsatz des Verfahrens zur Umsetzung der Auktion verständlicher zu machen.

Die Beispielsauktion beginnt mit einem festgesetzten Preis für eine Ware, ein Produkt oder ein anderes verkaufswertes Gut, beispielsweise einem Einkaufs- oder Reisegutschein im Werte von 1.000 DM. Jedoch kann der Preis auch höher oder niedriger sein.

Vorzugsweise entspricht der angesetzte Preis hierbei dem üblichen Verkaufswert der Ware, Dienstleistung usw. Im vorgestellten Beispiel reduziert sich automatisch der Preis alle fünf Minuten (andere Zeitspannen möglich) um einen gewissen Betrag, beispielsweise 5 DM.

Der Teilnehmer an der Auktion, der also einen günstigeren Preis haben möchte, muss auf einen günstigen Moment warten, bei dem der Preis sich soweit reduziert hat, dass er zum Kauf bereit ist. Jedoch kann es passieren, dass bereits ein anderer Teilnehmer sich für den Kauf vor ihm entschieden hat und somit den Gegenstand (zu einem höheren Preis) erstanden hat. Der aktuelle Preis wird den Teilnehmern der Auktion in konstanten Zeitschritten, beispielsweise im Minutentakt, jeweils neu angesagt.

Derartige Auktionen können mit verschiedenen Gegenständen, Waren, Artikeln oder Dienstleistungen gleichzeitig nebeneinander ablaufen. Die Teilnehmer haben hierbei die Möglichkeit, von einer Auktion in eine andere zu gehen und dort ihr Glück zu versuchen. Es laufen allerdings für jeden Teilnehmer in der Zeit der Teilnahme die Verbindungskosten mit dem Auktionssystem (insb. Telefonkosten), es sei denn, der Teilnehmer unterbricht seinen Kontakt mit dem Auktionssystem, wartet eine gewisse Zeit und nimmt dann den Kontakt wieder auf, um die aktuellen Preise in den verschiedenen Auktionen erneut abzufragen.

Es ist jedoch auch möglich, auf eine zeitabhängige Komponente zu verzichten und unter Einsatz eines zentralen Sprachcomputers, der mit dem Benutzer eine verständliche Kommunikation abwickelt (insbesondere per Telefon, aber auch Internet, PC oder Interaktives Fernsehen wären möglich), eine "Aufwärtsauktion (steigende Preise) oder "Abwärtsauktion" (fallende Preise) durchzuführen.

Ferner hat auf diese Weise jeder Teilnehmer, der sich in das Verfahren einbezieht, die Möglichkeit, seine eigene Auktion, z.B. Telefonauktion oder Fernverkauf, durchzuführen, indem er sein Angebot an den zentralen Informationsempfänger/Sprachcomputer übermittelt, der dieses Angebot direkt oder als, gegebenenfalls kodierte, parameterbehaftete Signalinformation Netzteilnehmern, insbesondere auf Anfrage, zur Verfügung stellt und direkt oder über den zentralen Informationsempfänger/Sprachcomputer eine Rückantwort, insbesondere als parameterbehaftete Signalinformation, an den Teilnehmer erfolgt.

Neben Teilnehmer, die sich in das Verfahren einbeziehen und eine eigene Auktion durchführen, können Auktionen oder Verkaufsanträge auch von externen privaten oder kommerziellen Anbietern/Verkäufern beispielsweise per Sprachbefehl oder Tastendruck eingegeben werden, wobei diese Auktionen oder Verkaufsanträge vollautomatisch abgewickelt werden können. Es können also auch außenstehende Anbieter/Verkäufer Angebote unterbreiten.

Am Beispiel einer Aktivierung einer Auktion per Telefon wird dies im folgenden näher erläutert. Ein Anbieter/Verkäufer wählt dabei eine bestimmte Telefonnummer an und gibt zunächst eine Einwahlnummer und/oder Einwahlidentifikationsnummer (Einwahl-PIN) ein. Anschließend werden vom AnbieterNerkäufer benötigte Informationen per Sprachübertragung eingegeben, indem dieser beispielsweise durch Sprachsteuerung und/oder Tastendruck zwischen Gruppen, wie insbesondere Produktkategorie, Auktionstext, Details/Informationen zum Auktions-/Verkaufsgegenstand ggf. mit Bild, Startpreis, Preissenkung/Preiserhöhung, Anzahl an Preissenkungsschritten/Anzahl an Preiserhöhungsschritten, Zeitspanne zwischen Bietschritten, Anzahl an Auktionswiederholungen, auswählt und die benötigten Informationen aufnimmt. Dabei können alle Angabe während der Eingabe korrigiert, gelöscht oder neu aufgenommen werden. Auch weisen alle Gruppen eine eindeutige Gruppennummer aufweisen. Es besteht zudem die Option die vom Verkäufer/Anbieter aufgesprochenen Texte per Sprachbefehl oder Tastendruck mittels eines Sprachumwandlers verbessert aufsprechen zu lassen. Anbieter solcher Telefonauktionen können die benötigten Informationen auch per Bild-Text- und Sprachübertragung per Telefon oder anderen Sende- und Empfangsgeräten eingeben und absenden. Insbesondere über die Gruppe "Details/Informationen zum Auktions-/Verkaufsgegenstand ggf. mit Bild" können Produktinformationen von Interessenten während der Auktion/ des Angebotes direkt angesteuert und abgerufen werden.

Die Aktivierung des Auktions-/Verkaufsangebotes erfolgt abschließend ebenfalls durch Sprachbefehl. Jedes Auktions-/Verkaufsangebot erhält dann eine eindeutige, insbesondere fortlaufende Nummer, die automatisch vergeben wird. Die Aktivierung ist jedoch nicht auf einen Sprachbefehl beschränkt, vielmehr kann diese insbesondere auch per Email, SMS oder Fax erfolgen.

Erfolgt während der auf dem derart übermittelten Angebot beruhenden Auktion ein Zuschlag, erhält der Verkäufer automatisch per Telefon, Fax, Email oder SMS eine Benachrichtigung, welche insbesondere Daten des Käufers mit Auktionsnummer, Zuschlagspreis, Name, Anschrift, Telefonnummer, Email-Adresse wiedergeben kann. Eine anschließende Abwicklung des Geschäftes erfolgt dann direkt zwischen Käufer und Verkäufer.

Die Telefonauktionen können folglich technisch so vorbereitet werden, dass prinzipiell beliebig viele Teilnehmer als Bieter/Empfänger oder Anbieter/Absender gleichzeitig mit den verschiedensten technischen Geräten an einer oder mehreren Telefonauktionen teilnehmen können.

Mit dem erfindungsgemäßen Verfahren wird es möglich, eine fast unbegrenzte Anzahl von Empfängern in einer oder in verschiedenen Auktionen gleichzeitig mit dem computerimplementierten Datenerzeuger/Datentransmitter zu verbinden.

Wie bereits oben erwähnt, erfolgt der Zuschlag in der Beispielsauktion aufgrund eines Antwortsignales des Empfängers, das von einem Sprachcomputer oder einem mit diesem verbundenen Auktionscomputer bewertet wird, und wobei der Sprachcomputer, gegebenenfalls nach Nennung des aktuellen (Zuschlag-) Wertes, den Zuschlag erteilt und kommuniziert oder ein Angebot abgibt (aktueller Zuschlagswert), das der Empfänger ablehnen oder annehmen kann.

Mit dem erfindungsgemäßen Verfahren wird es möglich, über ein insbesondere sprachgesteuertes System als Teil des computerimplementierten Datenerzeugers/Datentransmitters (insbesondere eines Sprachcomputers mit menschlicher Stimme) ohne Telefonisten auszukommen und dabei eine fast unbegrenzte Anzahl von Antwortsignalen von Teilnehmern auch verschiedener Auktionen annähernd gleichzeitig zu bearbeiten.

Wie auch bei dem beschriebenen Beispiel war der Empfänger bei dem erfindungsgemäßen Verfahren bisher noch nicht registriert; die Registrierung folgt in einem Schritt der Weiterverarbeitung des Antwortsignales, dessen konkreten Ablauf der Empfänger in Zusammenarbeit mit dem Datenerzeuger/Datentransmitter selbst steuern kann.

Wie bereits eingangs beschrieben und in Fig. 1 dargestellt, ist einer der ersten Schritte des Verfahrens der, dass der computerimplementierte Datenerzeuger/Datentransmitter 2 eine (oder mehrere) erste Signalinformationen 1 an einen oder mehrere Empfänger 3 überträgt. Hierbei arbeitet der computerimplementierte Datenerzeuger/Datentransmitter vollautomatisch und wählt aus einer Vielzahl in ihm abgespeicherter Objekte nach einem herkömmlichen Schema, je Verfahrensablauf, ein oder mehrere Objekte aus. Hierbei kann die Auswahl zufallsgesteuert, chronologisch oder in jeder anderen Art erfolgen.

Nach der Auswahl des Objektes werden dessen wesentliche Eigenschaften, also alle das Objekt näher bestimmende und für den Empfänger relevanten Eigenschaften abgerufen und diese zusammen mit einer Bewertung (beispielsweise einer Preisinformation) im Rahmen der ersten Signalinformation 1 an den Empfänger 3 übertragen.

Es ist noch hinzuzufügen, dass die ersten Signalinformation 1 durchaus auch aus einer Gruppe von Signalinformationen bestehen kann, wobei einzelne Signale bzw. Informationen so lange und so oft übertragen bzw. in wiederholter Art und Weise übertragen werden, bis alle notwendigen Informationen bei dem Empfänger 3 angelangt sind.

Soweit es den Empfänger 3 betrifft, ist noch anzuführen, dass der Empfänger 3 in der Fig. 1 als Repräsentant einer Vielzahl von möglichen Einzelempfängern dargestellt ist, die unabhängig voneinander operieren können, und denen jeweils eine (vorzugsweise identische) erste Signalinformation übertragen wird, auch wenn dies nicht bedingungsnotwendigerweise zum gleichen Zeitpunkt erfolgen muss.

Hierbei ist jedoch zu berücksichtigen, dass sie sich bezüglich einer übertragenen Bewertung des Objektes insoweit unterscheiden können, als dass jeweils eine aktuelle Bewertung übertragen wird. Insoweit gilt das im Folgenden für die weiteren Signalinformationen bezüglich der zeitabhängigen Parameters Gesagte entsprechend auch für die erste Signalinformation.

In einem weiteren Schritt überträgt der computerimplementierte Datenerzeuger/Datentransmitter 2 ein oder mehrere weitere Signalinformationen 4, die jeweils den zeitabhängigen Parameter 5 enthalten. Der zeitabhängige Parameter 5 stellt hierbei vorzugsweise die Bewertung des Objektes (Preisinformation) dar, dessen Eigenschaftsinformationen bereits im Rahmen der ersten Signalinformation 1 übertragen worden sind.

Hierbei generiert der computerimplementierte Datenerzeuger/Datentransmitter ein Zeitsignal, das vorzugsweise dann gestartet wird, wenn zum ersten Mal eine erste Signalinformation 1 übertragen wird. Das Zeitsignal kann von einem in dem computerimplementierten Datenerzeuger/Datentransmitter 2 integrierten Zähler erzeugt werden, von dem ausgehend die Zeitparameter abhängige Signalinformation 4 beeinflusst wird. So kann beispielsweise ein Zähler von einem Anfangswert aus kontinuierlich diesen Zählwert erhöhen oder reduzieren.

Ausgehend von diesem erhöhten oder reduzierten Zählwert und der ursprünglichen Bewertung des Objektes wird dann mittels eines Umwandlungsgenerators die aktuelle Bewertung des Objektes festgelegt, wobei vorzugsweise entsprechend dem Zeitablauf (also dem erhöhten oder reduzierten Zählwert) die ursprüngliche Bewertung in Zeitstufen reduziert wird.

Hierbei ist als Reduktionsstufe für die aktuelle Bewertung des Objektes vorzugsweise eine oder 5 Minuten vorgesehen, jedoch kann dieser Stufenwert auch kürzer oder länger sein.

Im Falle, dass die weiteren Signalinformationen 4 an mehrere Empfänger 3 bzw. einzelne Empfänger 3 übertragen werden, werden an die Einzelempfänger zu gleichen Zeitpunkten gleiche weitere Signalinformationen 4 übertragen, bei denen der jeweilige zeitabhängige Parameter 5 (aktueller Preis) die gleiche Bewertung aufweist.

All diese Übertragungen von Signalinformationen, die ein Objekt oder eine Gruppe von Objekten betreffen finden im Rahmen einer Datenübertragung statt. Dieser ist eigen, dass alle gleichzeitig oder im Zeitraum zwischen zwei Zeitstufen übertragenen Signalinformationen den gleichen jeweiligen Parameter 5 aufweisen.

Hierbei ist unerheblich, wann die erste Signalinformation 1 an den jeweiligen Einzelempfänger übertragen worden ist. Hierdurch wird gewährleistet, dass auch nach erstmaligem Beginn eines Verfahrens durchaus eine aktuelle Verbindung mit später einsteigenden Einzelempfängem aufgebaut werden kann. Im obigen Beispiel wäre somit jederzeit ein Ein- oder wieder Aussteigen eines Empfängers in den Auktionsablauf möglich.

Das Aussenden der weiteren Signalinformationen 4, die den zeitabhängigen Parameter 5 enthalten, wobei, wie oben bereits gesagt, der zeitabhängige Parameter 5 vorzugsweise die Bewertung (also den Preis) das in der ersten Signalinformation beschriebenen Objektes enthält, wird kontinuierlich oder in beabstandeten Schritten so lange durchgeführt, bis bei dem computerimplementierten Datenerzeuger/Datentransmitter 2 ein von einem der Empfänger 3 ausgesandtes Antwortsignal 6 empfangen wird.

In diesem Fall erfolgt dann eine automatische Weiterverarbeitung des Antwortsignales 6. Hierbei bedient sich der computerimplementierte Datenerzeuger/Datentransmitter 2 einer weiteren technischen Vorrichtung, die vorzugsweise in ihm integriert ist. Diese technische Vorrichtung umfasst: ein erstes Bauelement, das Antwortsignal auswertet; ein zweites Bauelement, das dann in individuelle Kommunikation mit dem Einzelempfänger tritt, von dem das Antwortsignal ausgesandt worden ist; und zumindest ein drittes Bauelement, in dem die weitere Behandlung des Objektes gesteuert wird.

Die Weiterverarbeitung des Antwortsignales hängt hierbei vom Einsatzgebiet des erfindungsgemäßen Verfahrens ab. Wenn beispielsweise das Verfahren auf akustischem, z.B. auf telefonischem Wege durchgeführt wird, und der Empfänger per Telefonanruf das Antwortsignal überträgt, kann ein Sprachcomputer oder eine sprachgesteuerte Einheit das Antwortsignal aufnehmen und dann automatisch die Registrierung des Empfängers übernehmen. Ebenso ist eine Kommunikation via Tastaturbefehl etc. (z.B. via Handy, Internet usw.) denkbar.

Hieran schließt sich dann die Beendigung der Auktion und die Ausgabe der ersteigerten Objekts an, was vorzugsweise wiederum computerimplementiert und vollautomatisch erfolgt.

Hierbei kann der Empfänger 3 den Beginn der Datenabfrage selbst z.B. durch Sprachbefehl steuern und somit mit dem computerimplementierten Datenerzeuger/Datentransmitter 2 in Kommunikation treten, während dieser - davon unabhängig - weitere Signalinformationen, die zu anderen Verfahrensabläufen gehören, überträgt und empfängt.

In dem Zeitraum zwischen der erstmaligen Aussendung der weiteren Signalinformationen 4 und dem Eingehen eines Antwortsignales 6 wartet der computerimplementierte Datenerzeuger/Datentransmitter 2 vorzugsweise jeweils eine gewissen Zeitspanne, die wiederum über den zeitabhängigen Parameter 5 gesteuert sein kann. Nach Ablauf dieser Zeitspanne erfolgt eine Anpassung der weiteren Signalinformation 4 an den aktuellen Stand des zeitabhängigen Zeitparameters 5, bevor dann die angepasste Signalinformation 4 (mit aktueller Bewertung des Objekts) erneut übertragen wird.

Alternativ zu dem oben beschriebenen Fall, bei dem die Aussendung der weiteren Signalinformation 4 eingestellt wird, sobald der computerimplementierte Datenerzeuger/Datentransmitter 2 ein Antwortsignal 6 von dem Empfänger 3 erhält, kann die Aussendung weiterer Signalinformationen 4 über diesen Zeitpunkt hinaus auch im Rahmen des erfindungsgemäßen Verfahrens noch fortgesetzt werden.

Dies ist insbesondere dann wünschenswert, wenn beispielsweise ein bestimmter Posten von angebotenen Objekten an mehrere Empfänger verteilt bzw. verkauft werden soll. Hierbei wird vorzugsweise im Zuge der Übertragung der ersten Signalinformation 1 auch die Bewertung des Objekts (als Fixpreis) mit übertragen.

Im Rahmen der weiteren Signalinformationen kann dann jeweils die noch verfügbare Anzahl der Gegenstände übertragen werden, wobei die Anzahl sich beispielsweise bei jedem Eingang eines Antwortsignales reduziert. Der zeitabhängige Parameter 5 kann in dieser Ausführungsform des Verfahrens zusätzlich oder alternativ von anderen Bestimmungsgrößen als einem zeitlichen Zählwert abhängig sein. Die andere Bestimmungsgröße ist hierbei die Anzahl noch vorhandener Objekte.

Ebenso ist es möglich, dass ein bestimmter Objekttyp nur für einen bestimmten Zeitraum angeboten wird, wobei die weiteren Signalinformationen 4 dann die verbleibende Restkaufzeit (zeitabhängiger Parameter 5) jeweils aktuell an die Empfänger übertragen.

In all diesen Fällen kann die Übertragung der weiteren Signalinformationen 4, entgegen der Darstellung in Fig. 1, über den Zeitpunkt des Eingangs des Antwortsignales 6 hinaus erfolgen und findet auch dann noch statt, wenn zwischenzeitlich die Weiterverarbeitung einer oder mehrerer Antwortsignale erfolgt ist.

Es ist selbstverständlich möglich, das Verfahren nicht nur im Rahmen eines (Telefongesteuerten) Fernauktionssystems einzusetzen. Auch ein Einsatz durch optische, elektrische oder andere Art und Weise der Datenübertragung im Zuge der neuen Medien, wie beispielsweise Internet, Telekommunikation, SMS, HTMS oder dergleichen ist denkbar.

Hierbei kann die Übertragung des Antwortsignales sowie auch der übrigen Signalinformationen per Computertastenklick, Ton- oder SMS-Versand, Telefaxabruf o. dgl. erfolgen. Die Weiterverarbeitung des Antwortsignales und der Kontakt mit dem Empfänger erfolgt dann jeweils in geeigneter Weise.

Hierbei ist ein Einsatz des Verfahrens auch nur zu Werbezwecken oder zu Werbegewinnspielen möglich. Ebenso ist es für Unterhaltungsspiele geeignet. Das Verfahren kann auch im Zuge eines automatischen Telefonverkaufs oder als Verkaufsplattform für alle Art von Waren, Dienstleistungen, usw. eingesetzt werden.

Der Einsatz des Verfahrens ist jedoch selbstverständlich auch im Rahmen eines größeren Umfeldes möglich, so dass beispielsweise ein Einsatz im Rahmen einer Auktionsplattform als Unterpunkt eines Menüs auf der Homepage eines Anbieters denkbar ist, wobei weitere Unterpunkte oder Kategorien andere Spiele, Informationen, Nachrichten, Börsenkurse, Witze, Kurzfilme o. dgl. sein können.

Hierbei kann ein einzelnes Verfahren parallel oder neben anderen Verfahren mittels eines computerimplementierten Datenerzeugers/Datentransmitters oder einer Vielzahl solcher nebeneinander eingesetzt werden. Auch ist es denkbar, dass vorab mit dem Einzelempfänger eine Kommunikation aufgebaut wird, beispielsweise auch vorab eine Registrierung erfolgt und/oder der Einzelempfänger bereits vorab die Kategorie der verfahrensgegenständlichen Objekte, der Preise der jeweiligen Preissenkung, der Zeitsprünge zwischen den einzelnen Preissenkungen und der Anzahl einzelner Auktionen oder Verfahrensabläufe festgelegt werden.

Hierbei gibt es immer wieder die Möglichkeit, alle Angaben während der Eingabe zu korrigieren, zu löschen oder neu aufzunehmen. Die Aktivierung kann durch Sprachbefehl oder auf andere bereits oben beschriebene oder ähnliche Methoden, z.B. Eingabe durch Internet, erfolgen. Hierbei ist auch eine Vorab-Nummerierung und ein Direktzugriff auf die Nummern der einzelnen Auswahlpunkte in den Verfahrensablauf aufnehmbar.

Ausschlaggebend für das Verfahren kann u.a. sein, dass zuerst ein Übertragen einer ersten Signalinformation durchgeführt wird, die einen zeitabhängigen Parameter 5 nicht enthält, und sodann eine Vielzahl von weiteren Signalinformationen übertragen wird, die jeweils einen zeitabhängigen Parameter 5 enthalten, und es dann zu einem Ende des Verfahrens durch Zeitablauf oder Interaktion mit Hilfe eines Antwortsignales kommt, und/oder aus der sich schließlich eine Weiterverarbeitung des Antwortsignales oder damit zusammenhängender Informationen ergibt. Jedoch kann auch bereits die erste Signalinformation den Parameter 5 enthalten.

Wird das Verfahren im Zuge von Auktionen eingesetzt, kann bei den Auktionen der Preis durch Sprachbefehle oder andere Steuerungsbefehle nach oben oder nach unten gesteuert werden. Mit Limit, ohne Limit, Zuschlag nach Zeit oder bei Erreichung eines Limits, Zuschlag wenn Limit erreicht ist und in bestimmter Zeit nicht mehr geboten wird, Zuschlag nach Erreichen bestimmter Anzahl von Bietschritten, feste Bietschritte, offene Bietschritte usw. sind möglich. Weitere Variationsmöglichkeiten sind denkbar.

Zu einem weiteren Anwendungs- bzw. Ausführungsbeispiel des erfindungsgemäßen Verfahrens können auch Telefonauktionen über einen Fernsehsender in Verbindung mit Telefon, E-Mail, SMS, Telefax usw. vollautomatisch abgewickelt werden, z.B. im Rahmen einer Dauerwerbesendung usw. Hierbei sendet ein Fernsehsender, der mit einem computergesteuerten Datenerzeuger/Datentransmitter gekoppelt ist, die Informationen an die Bieter (Empfänger). Die Bieter senden ihren Kaufwunsch an ein Empfangsgerät, welches alles speichert und verarbeitet und dem computergesteuerten Datenerzeuger/Datentransmitter mitteilt. Hierbei werden Informationen, wie z.B. insbesondere Daten, Bilder, Zahlen, Buchstaben, Figuren, Beschreibungen oder dergleichen von dem computergesteuerten Datenerzeuger/Datentransmitter einem Sendegerät bzw. einem Fernsehsender übermittelt. Es handelt sich überwiegend um Daten zu Angeboten von Waren, Dienstleistungen usw.. Im Rahmen einer (Dauer)-werbesendung können nun diese Daten mit Bildern, Preisen usw. vom Fernsehsender ausgesandt werden. Hierbei werden die angebotenen Waren, Dienstleistungen usw. automatisch billiger (Abwärtsauktion), durch eine automatische Zeitsteuerung mit Preissenkung, bis ein Käufer kauft bzw. den Zuschlag erhält oder die eingestellte Preissenkung das Angebot beendet. Ein Käufer erhält den Zuschlag dann, wenn er per Telefon, E-Mail, SMS usw. den Kaufwunsch einem Empfangsgerät mitteilt, solange die Auktion noch läuft. Gleichzeitig werden die Datenausstrahlungen durch den Fernsehsender für das angebotene Produkt beendet und gegebenenfalls ein neues Angebot ausgestrahlt.

Ist es eine Aufwärtsauktion, so kann der Bieter seine Gebote selbst per Telefon, Internet, SMS usw. dem Empfangsgerät mitteilen. Hier erhält ein Bieter den Zuschlag, wenn nicht innerhalb eines Zeitrahmens von XXX Sekunden, Minuten usw. nach Abgabe seines letzten Gebotes ein höheres Gebot abgegeben wird. Die Auktion endet mit Zuschlag oder wenn ein festgesetzter Mindestpreis nicht erreicht wird.

In beiden Fällen, Abwärtsauktion und Aufwärtsauktion, kann alles vollautomatisch ablaufen, wobei die jeweiligen Informationen mit den zeitabhängigen Parameter verknüpft werden, wobei dieser die jeweiligen Zeitrahmen setzt. Die Auktionsplattform wäre also in diesem Fall der Fernsehsender, der die Daten, Bilder usw. ausstrahlt.

Vorstellbar ist auch, dass der Fernsehsender die Daten und Bilder usw. für mehrere und verschiedene laufende Auktionen gleichzeitig oder hintereinander und in Wiederholungen immer mit den neuesten Preisen (Abwärtsauktion) und Geboten (Aufwärtsauktion) auf einem Bildschirm darstellt.

Vorstellbar ist auch, und das könnte in der Zukunft möglich werden, dass der Fernsehsender Signale über ein Empfangsgerät von Fernsehteilnehmern erhält und dann diesen Fernsehteilnehmern bestimmte Daten, Bilder usw. von anderen Auktionen auf ihren Fernsehbildschirm sendet bzw. einblendet (das laufende Programm oder das des jeweiligen Fernsehteilnehmers wird solange ausgeblendet). Das ist so zu verstehen, dass sich jeder Fernsehteilnehmer eine andere laufende Auktion des Fernsehsenders auf seinen Bildschirm oder andere Empfangsgeräte holen kann.

Außerhalb von Auktionen ist das Verfahren auch dann einsetzbar, wenn beispielsweise Untersuchungen statistischer oder technischer bzw. medizinischer oder sonstiger Art durchgeführt werden sollen, wobei nach Stellung einer zu lösenden Aufgabe oder eines zu lösenden Problems durch Übertragung einer ersten Signalinformation auf den Zugang von weiteren Informationen mittels eines Antwortsignales gewartet werden soll und das Abwarten eine zeitlich relevante Komponente enthält.

Hierbei kann beispielsweise das erfindungsgemäße Verfahren auch zum Einsatz kommen, wenn der computerimplementierte Datenerzeuger/Datentransmitter Ergebnisse von Versuchsproben im Rahmen der ersten Signalinformation überträgt und hierauf eine auswertende Rückmeldung von einem oder einer Vielzahl von Empfängern erwartet.

Hierbei ist es auch denkbar, dass der oder die Empfänger automatisch operierende Datenspeichereinheiten o. dgl. darstellen. Eine Verfahrenssteuerung erfolgt hier vollständig durch den computerimplementierten Datenerzeuger/Datentransmitter, wobei der Einzelempfänger zur Abgabe eines Antwortsignales aufgefordert wird und sodann automatisch im Rahmen eines bestimmten Zeitraumes dieser Aufforderung nachkommt.

Im letztbeschriebenen Beispiel ist es daher möglich, im Zuge einer Problemlösung bestimmte Aufgabenschritte an unterschiedliche ortsferne (ausgelagerte) Computer zu übertragen, die freie Rechenkapazität aufweisen, wobei dann Geschwindigkeit oder problemabhängig die jeweilige Teillösung in Form eines Antwortsignales an den computerimplementierten Datenerzeuger/Datentransmitter zurückgeführt wird.

Mit dem Begriff "parameterbehaftete Signalinformation" ist hinsichtlich der "Signalinformation" vorzugsweise eine Produktdienstleistungsinformation gemeint, während der Begriff "Parameter" oder "parameterbehaftet" vorzugsweise für einen Wert/Preis (bzw. eine Mehrzahl desselben) in der vorliegenden Anmeldung verwendet wird.

## Patentansprüche

1. Verfahren zur Datenübertragung mittels eines computerimplementierten Datenerzeugers/Datentransmitters (2) das die folgenden Schritte aufweist:
- Erzeugen und Aussenden einer ersten Signalinformation (1) mit einem invarianten oder variablen Parameter (5) an zumindest einen Empfänger (3);
- insbesondere Aussenden weiterer Signalinformationen (4), die jeweils einen weiteren, insbesondere zeitabhängigen Parameter (5) enthalten können, zumindest bis zum Empfang eines von dem Empfänger (3) oder einem mit diesem verbindbaren Netzteilnehmer stammenden parameterbehafteten Antwortsignales (6); und
- Weiterverarbeiten des Antwortsignales (6) in Abhängigkeit von dem mit der ersten Signalinformation ausgesandten oder mit der anschließenden Signalinformation ausgesandten, weiteren Parameter (5).

2. Verfahren nach Anspruch 1, **dadurch gekennzeichnet, dass** die weiteren Signalinformationen (4) in Abhängigkeit von dem insbesondere zeitabhängigen Parameter (5) schrittweise variiert werden.

3. Verfahren nach Anspruch 1 oder 2, **dadurch gekennzeichnet, dass** die Signalinformationen (1,4) Bild- und/oder Tondaten aufweisen.

4. Verfahren nach einem der Ansprüche 1 bis 3, **dadurch gekennzeichnet, dass** die erste Signalinformation (1) eine Vielzahl einzelner Signalinformationen aufweist.

5. Verfahren nach einem der Ansprüche 1 bis 4, **dadurch gekennzeichnet, dass** zumindest die weiteren Signalinformationen (4) Informationen aufweisen, die einem Wert des zeitabhängigen Parameters (5) entsprechen oder aus diesem heraus berechenbar sind.

6. Verfahren nach einem der Ansprüche 1 bis 5, **dadurch gekennzeichnet, dass** zumindest die erste Signalinformation (1) Informationen bezüglich eines Gegenstandes oder eines anderen verkehrsfähigen Gutes aufweisen.

7. Verfahren nach einem der Ansprüche 1 bis 6, **dadurch gekennzeichnet, dass** zumindest die weiteren Signalinformationen (4) eine Bewertung insbesondere eine Preisinformationen bezüglich eines Gegenstandes oder eines anderen verkehrsfähigen Gutes aufweisen.

8. Verfahren nach einem der Ansprüche 1 bis 7, **dadurch gekennzeichnet, dass** die Signalinformationen (1, 4) von dem computerimplementierten Datenerzeuger/Datentransmitter (2) über leitungsgebundene Netze und/oder über leitungsunabhängige Sendeanlagen übertragen werden.

9. Verfahren nach einem der Ansprüche 1 bis 8, **dadurch gekennzeichnet, dass** das Antwortsignal (6) als akustisches Signal, insbesondere Sprachbefehl, Telefaxabruf, E-Mail, SMS übertragen wird.

10. Verfahren nach einem der Ansprüche 1 bis 9, **dadurch gekennzeichnet, dass** eine Registrierung des Empfängers (3) bei dem computerimplementierten Datenerzeuger/Datentransmitter (2) erst mit oder nach dem Empfang des Antwortsignales (6) erfolgt.

11. Verfahren nach einem der Ansprüche 1 bis 10, **dadurch gekennzeichnet, dass** der computerimplementierte Datenerzeuger/Datentransmitter (2) im wesentlichen gleichzeitig eine Mehrzahl von voneinander unabhängigen Datenübertragungen ausführt, wobei jede der Datenübertragungen eigene Signalinformationen (1,4) aufweist.

12. Verfahren nach Anspruch 11, **dadurch gekennzeichnet, dass** die Signalinformationen (4) von voneinander unabhängigen Datenübertragungen unterschiedliche zeitabhängige Parameter (5) aufweisen.

13. Verfahren nach Anspruch 11 oder 12, **dadurch gekennzeichnet, dass** gleichzeitig übertragene Signalinformationen (4) einer Datenübertragung zeitabhängige Parameter (5) gleichen Wertes aufweisen.

14. Verfahren nach einem der Ansprüche 11 bis 13, **dadurch gekennzeichnet, dass** die Dauer einer jeweiligen Datenübertragung und die Anzahl der ausgesandten weiteren Signalinformationen (4) unabhängig von den parallel dazu übertragenen Datenübertragungen ist.

15. Verfahren nach einem der Ansprüche 1 bis 14, **dadurch gekennzeichnet, dass** die Signalinformationen (4) bei jeder Zeitstufe an den aktuellen Parameter (5) angepasst werden.

16. Verfahren nach einem der Ansprüche 1 bis 15, **dadurch gekennzeichnet, dass** die Übertragung der weiteren Signalinformationen (4) durch Antwortsignale (5) von jedem Empfänger (3) individuell beeinflussbar ist.

17. Verfahren nach einem der Ansprüche 1 bis 16, **dadurch gekennzeichnet, dass** der zeitabhängige Parameter (5) ausgehend von einem Startwert linear oder in Stufenschritten veränderbar ist.

18. Verfahren nach einem der Ansprüche 1 bis 17, **dadurch gekennzeichnet, dass** die weiteren Signalinformationen (4) ein Wertsignal enthalten, das umso kleiner wird, je größer der zeitabhängige Parameter (5) wird.

19. Verfahren zur Datenübertragung mittels eines computerimplementierten Datenerzeugers/Datentransmitters in einem Netzwerk, insbesondere nach einem der Ansprüche 1 bis 18, **dadurch gekennzeichnet, dass** eine erste, einen variablen oder invarianten Parameter enthaltende Signalinformation nach Herstellung einer, insbesondere über eine Telefonleitung erfolgender Signalverbindung zwischen einem Empfänger/Sender und einem Sprachcomputer zwischen diesen ausgetauscht wird und der Empfänger/Sender ein parameterbehaftetes Informationssignal in Abhängigkeit von dem ersten parameterbehafteten Signalinformationsaustausch an den Sprachcomputer abgibt, von diesem erhält oder direkt von einem weiteren Netzteilnehmer empfängt.
